(19) **Europäisches Patentamt / European Patent Office / Office européen des brevets**

(11) **EP 4 621 091 A1**

(12) **EUROPEAN PATENT APPLICATION**
published in accordance with Art. 153(4) EPC

(43) Date of publication:
24.09.2025 Bulletin 2025/39

(21) Application number: 23891822.1

(22) Date of filing: 11.10.2023

(51) International Patent Classification (IPC):
C22C 38/02 $^{(2006.01)}$      C22C 38/06 $^{(2006.01)}$
C22C 38/04 $^{(2006.01)}$      C22C 38/14 $^{(2006.01)}$
C22C 38/08 $^{(2006.01)}$      C22C 38/00 $^{(2006.01)}$
C22C 38/12 $^{(2006.01)}$      C21D 9/46 $^{(2006.01)}$
C21D 8/12 $^{(2006.01)}$

(52) Cooperative Patent Classification (CPC):
B21C 47/02; C21D 8/12; C21D 9/46; C22C 38/00;
C22C 38/02; C22C 38/04; C22C 38/06;
C22C 38/08; C22C 38/12; C22C 38/14;
H01F 1/147; Y02P 10/20

(86) International application number:
PCT/KR2023/015567

(87) International publication number:
WO 2024/106753 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.11.2022 KR 20220155267

(71) Applicant: POSCO Co., Ltd
Pohang-si, Gyeongsangbuk-do 37859 (KR)

(72) Inventors:
• HAN, Kyuseok
Pohang-si, Gyeongsangbuk-do 37859 (KR)

• LEE, Seungbok
Pohang-si, Gyeongsangbuk-do 37859 (KR)
• KO, Jaegon
Pohang-si, Gyeongsangbuk-do 37859 (KR)
• KIM, Jinhyun
Pohang-si, Gyeongsangbuk-do 37859 (KR)
• KIM, Jaekyoum
Pohang-si, Gyeongsangbuk-do 37859 (KR)
• PARK, Jungran
Pohang-si, Gyeongsangbuk-do 37859 (KR)

(74) Representative: Meissner Bolte Partnerschaft
mbB
Patentanwälte Rechtsanwälte
Postfach 86 06 24
81633 München (DE)

(54) **NON-ORIENTED ELECTRICAL STEEL SHEET AND MANUFACTURING METHOD THEREFOR**

(57) A non-oriented electrical steel sheet according to an embodiment includes, by wt%, 2.5 to 4.0% of Si, 0.03 to 2.0% of Al, 0.03 to 2.0% of Mn, a balance of Fe, and inevitable impurities, wherein an area fraction of <111>//ND grains is 20% or less, and a ratio of the area fraction of <100>//ND grains to the area fraction of <110>//ND grains is 1.01 or greater.

EP 4 621 091 A1

**Description**

**[Technical Field]**

The present disclosure relates to a non-oriented electrical steel sheet and a manufacturing method thereof. An embodiment of the present disclosure relates to a non-oriented electrical steel sheet for performing annealing between pre-rolling and cold rolling, and rapidly increasing a temperature during the annealing to form grains with specific orientation and have uniformly excellent magnetism in entire directions during a process for pre-rolling a hot rolled plate and cold rolling the same, and a manufacturing method thereof.

**[Background Art]**

Recently, as disasters caused by climate change increase, countries around the world are announcing carbon neutrality roadmaps for 2050. The total amount of carbon emissions in 2020 will reach 39 billion tons, of which internal combustion engines discharge will occupy 24%, reaching 9.4 billion tons. Therefore, there is a big demand to achieve carbon neutrality in this field through electrification of internal combustion engines. To this end, electrification is progressing rapidly in the mobility sector, led by electric vehicles. The characteristics required of drive motors in new mobility are to increase driving distances and increase top speeds. This directly relates to low iron loss characteristics of electrical steel sheets. Lowering the iron loss of electrical steel sheet may further improve efficiency and extend the driving range. Therefore, the high-frequency low iron loss characteristic of electrical steel is essential, and to this end, electrical steel sheet usually contains a large amount of Si and adds a large amount of elements such as Al, Mn, and Cr to secure the high-frequency low iron loss.

However, when a large amount of high resistivity alloy elements such as Si, Al, Mn, and Cr are added, a problem occurs in which the magnetic flux density decreases. In particular, the use of materials with high flux density is essential for materials that continuously require weight reduction, such as environmentally-friendly electric vehicle driving motors.

To achieve this, a method was proposed to improve the characteristics by fabricating a hot rolled plate, and a method was proposed to improve magnetism by including high Al and performing annealing twice and rolling twice. In addition, a method for thinning a hot rolled metal sheet using a method for manufacturing a thin slab was proposed.

However, the method of reducing thickness of the hot rolled plate is difficult to mass-produce due to the increase in rolling load in the general hot rolling process, and although the addition of high Al and the double annealing and double rolling process have some improvement in magnetism, the {110}<001> Goss texture also develops, so the circumferential characteristics of the motor are degraded and surface defects due to the addition of high Al also increase significantly.

**[Disclosure]**

**[Technical Problem]**

The present disclosure attempts to provide a non-oriented electrical steel sheet and a manufacturing method thereof. The present disclosure attempts to provide a non-oriented electrical steel sheet for performing annealing between pre-rolling and cold rolling, and rapidly increasing a temperature during the annealing to form grains with specific orientation and have uniformly excellent magnetism in entire directions during a process for pre-rolling a hot rolled plate and cold rolling the same, and a manufacturing method thereof.

**[Technical Solution]**

An embodiment of the present disclosure provides a non-oriented electrical steel sheet including: 2.5 to 4.0% of Si, 0.03 to 2.0% of Al, and 0.03 to 2.0% of Mn in wt%, a balance of Fe, and inevitable impurities, wherein an area fraction of <111>//ND grains is 20% or less, and a ratio of the area fraction of <100>//ND grains to the area fraction of <110>//ND grains is 1.01 or greater.

A <100> axis of the <100>//ND grains is within a range of 15 degrees from a vertical axis (ND) on a surface of the steel sheet, a <111> axis of the <111>//ND grains is within the range of 15 degrees from the vertical axis (ND) on the surface of the steel sheet, and a <110> axis of the <110>//ND grains is within the range of 15 degrees from a vertical axis (ND) on a surface of the steel sheet. The area fraction refers to the ratio of the area occupied by grains of a specific orientation to the entire area of the steel sheet as measured by electron backscatter diffraction (EBSD).

The area fraction of the <100>//ND grains may be 10% or greater.

The non-oriented electrical steel sheet may further include at least one of 0.005 to 0.2 wt% of Cu, 0.01 to 0.5 wt% of Cr, 0.05 wt% or less of Ni (excluding 0%), and 0.01 wt% or less of Zn (excluding 0%).

The non-oriented electrical steel sheet may further include at least one of 0.1 wt% or less of P (excluding 0%), 0.003 wt% or less of C (excluding 0%), 0.004 wt% or less of S (excluding 0%), 0.003 wt% or less of Ti (excluding 0%), and 0.003 wt% or less of N (excluding 0%).

The non-oriented electrical steel sheet may further include 0.03 wt% or less of Mo (excluding 0%), 0.0050 wt% or less of B (excluding 0%), 0.0050 wt% or less of V (excluding 0%), 0.0050 wt% or less of Ca (excluding 0%), 0.0050 wt% or less of Nb (excluding 0%), and 0.0050 wt% or less of Mg (excluding 0%).

The non-oriented electrical steel sheet may further include 0.005 to 0.200 wt% of one or more of Sn, Sb, Bi, Pb, Ge, and As individually or as a summed content thereof.

The non-oriented electrical steel sheet may satisfy at least one of Equation 1 to Equation 3.

[Equation 1]

$$(B50_L + B50_C) / 2 \geq 1.63$$

[Equation 2]

$$\{(B50_L + B50_C + B50_{60}) / 3\} / \{ (B50_L + B50_C) / 2\} \geq 0.95$$

[Equation 3]

$$B50_{60} / \{ (B50_L + B50_C) / 2\} \geq 0.90$$

(in Equation 1 to Equation 3, $B50_L$ is flux density (B50, Tesla) measured in the rolling direction, $B50_C$ is flux density (B50, Tesla) measured in the vertical direction to the rolling direction, and $B50_{60}$ is flux density (B50, Tesla) measured in the direction forming an angle of 60 degrees with respect to the rolling direction.)

The non-oriented electrical steel sheet may satisfy Equation 4.

[Equation 4]

$$(W10/400_L + W10/400_C) / 2 \leq 6.885 \times e^{(2.99 \times t)}$$

(in Equation 4, $W10/400_L$ is iron loss (W10/400, W/kg) measured in the rolling direction, $W10/400_C$ is iron loss (W10/400, W/kg) measured in the vertical rolling direction, e is a Euler's number, and t is thickness (mm) of the electrical steel sheet).

An embodiment of the present disclosure provides a method for manufacturing a non-oriented electrical steel sheet including: manufacturing a hot rolled plate by hot rolling a slab including 2.5 to 4.0% of Si, 0.03 to 2.0% of Al, and 0.03 to 2.0% of Mn as wt%, a balance of Fe, and inevitable impurities; manufacturing a preliminary cold-rolled steel sheet by preliminarily cold rolling the hot rolled plate by 20 to 80%; annealing the preliminary cold-rolled steel sheet by heating the same at a temperature increase rate of 20°C/s or greater to thus perform intermediate annealing; manufacturing a cold-rolled steel sheet by cold rolling the intermediately annealed preliminary cold-rolled steel sheet at a reduction ratio of 30 to 80%; and annealing the cold-rolled steel sheet.

The manufacturing of a hot rolled plate may include performing finish rolling at the temperature of 850°C or higher.

The manufacturing of a hot rolled plate may include performing water cooling when at least 0.1 second passes after finish rolling.

The manufacturing of a hot rolled plate may include winding at the temperature of 600 to 800°C.

The slab may further include at least one of 0.005 to 0.2 wt% of Cu, 0.01 to 0.5 wt% of Cr, 0.05 wt% or less of Ni (excluding 0%), and 0.01 wt% or less of Zn (excluding 0%).

The slab may further include at least one of 0.1 wt% or less of P (excluding 0%), 0.003 wt% or less of C (excluding 0%), 0.004 wt% or less of S (excluding 0%), 0.003 wt% or less of Ti (excluding 0%), and 0.003 wt% or less of N (excluding 0%).

The slab may further include 0.005 to 0.200 wt% of one or more of Sn, Sb, Bi, Pb, Ge, and As individually or as a summed content thereof.

The slab may further include at least one of 0.03 wt% or less of Mo (excluding 0%), 0.0050 wt% or less of B (excluding 0%), 0.0050 wt% or less of (excluding 0%) of V, 0.0050 wt% or less of Ca (excluding 0%), 0.0050 wt% or less of Nb (excluding 0%), and 0.0050 wt% or less of Mg (excluding 0%).

**[Advantageous Effects]**

The non-oriented electrical steel sheet according to the embodiment has excellent magnetic flux density and iron loss in all directions.

The non-oriented electrical steel sheet according to the embodiment may contribute to the manufacturing of environmentally-friendly vehicle motors, high-efficiency home appliance motors, and super-premium motor cores.

**[Mode for Invention]**

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Thus, a first element, component, region, layer, or section discussed below could be termed a second element, component, region, layer, or section without departing from the teachings of the present disclosure.

The technical terms used herein are to simply mention a particular embodiment and are not meant to limit the present disclosure. An expression used in the singular encompasses an expression of the plural, unless it has a clearly different meaning in the context. In the specification, it is to be understood that terms such as "including", "having", etc., are intended to indicate the existence of specific features, regions, numbers, stages, operations, elements, components, or combinations thereof disclosed in the specification, and are not intended to preclude the possibility that one or more other specific features, regions, numbers, operations, elements, components, or combinations thereof may exist or may be added.

When a part is referred to as being "on" another part, it can be directly on the other part or intervening parts may also be present. In contrast, when an element is referred to as being "directly on" another element, there are no intervening elements therebetween.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the same meanings as contextual meanings in the relevant field of art, and are not to be interpreted to have idealized or excessively formal meanings unless clearly defined in the present application.

Unless otherwise specified, % represents wt%, and 1ppm is 0.0001wt%.

In an embodiment of the present disclosure, further including an additional element signifies that the added element is substituted for iron (Fe) that is a balance.

Embodiments of the present disclosure will now be described in detail so that those skilled in the art to which the present disclosure pertains may easily implement the embodiments. As those skilled in the art would realize, the described embodiments may be modified in various different ways, all without departing from the spirit or scope of the present disclosure.

The non-oriented electrical steel sheet includes 2.5 to 4.0% of Si, 0.03 to 2.0% of Al, and 0.03 to 2.0% of Mn as wt%, and includes a balance of Fe and inevitable impurities.

Reasons for limiting components of the non-oriented electrical steel sheet will now be described.

2.5 to 4.0 wt% of Si

Silicon (Si) servers to increase resistivity of a material and reduce iron loss so a relatively large amount thereof is to be added. When Si is added very little, a high-frequency iron loss improved effect may be insignificant. When Si is added very much, hardness of the material increases to deteriorate productivity and punching properties, which is thus not preferred. In detail, 2.9 to 3.7 wt% of Si may be included.

0.03 to 2.0 wt% of Al

Aluminum (Al) servers to increase resistivity of a material and reduce iron loss so a large amount thereof is to be added. When Al is added very little, there may be no high-frequency iron loss reduced effect, and nitride may be minutely formed to degrade magnetism. When Al is added very much, a physical property of mold flux may be changed, and productivity may be substantially deteriorated during a continuous casting process. In detail, 0.1 to 1.8 wt% of Al may be included, and in further detail, 0.5 to 1.5 wt% of Al may be included.

0.03 to 2.0 wt% of Mn

Manganese (Mn) servers to increase resistivity of a material, improve iron loss, and form sulfide. When Mn is added very little, MnS may be minutely precipitated to degrade magnetism. When Mn is added very much, formation of the texture of <111>//ND that is disadvantageous to magnetism may be promoted to steeply reduce the magnetic flux density. In detail, 0.05 to 1.9 wt% of Mn may be included.

The non-oriented electrical steel sheet may further include at least one of 0.005 to 0.2 wt% of Cu, 0.01 to 0.5 wt% of Cr, 0.05 wt% or less of Ni (excluding 0%), and 0.01 wt% or less of Zn (excluding 0%).

0.005 to 0.200 wt% of Cu

Copper (Cu) serves to form sulfide with Mn. When Cu is further added but a very small amount thereof is added, (Cu · Mn)S may be minutely precipitated to degrade magnetism. When Cu is added very much, high-temperature brittleness is generated so that cracks may be formed during soft casting or hot rolling. In detail, 0.01 to 0.10 wt% of Cu may be included.

0.01 to 0.50 wt% of Cr

Chromium (Cr) serves to increase resistivity and improve iron loss. When Cr is added very little, resistivity increasing effect may be insufficient. When Cr is added very much, flux density may be deteriorated. In detail, 0.050 to 0.20 wt% of Cr may be included.

0.05 wt% or less of Ni

Nickel (Ni) may react to impurity elements to form fine sulfide, carbide, and nitride and may give a bad influence to magnetism. In detail, 0.001 to 0.03 wt% of Ni may be included.

0.01wt% or less of Zn

When a content of zinc (Zn) is excessive, it may serve as an impurity to deteriorate magnetism. Hence, Zn may be further added in the above-described range. In detail, 0.001 to 0.005 wt% of Zn may be included.

The non-oriented electrical steel sheet may further include 0.1% or less of P (excluding 0%), 0.003% or less of C (excluding 0%), 0.004% or less of S (excluding 0%), 0.003% or less of Ti (excluding 0%), and 0.003% or less of N (excluding 0%).

0.1 wt% or less of P

Phosphorus (P) may, as grain boundary segregation elements, improve flux density, and when very much thereof is added, brittleness of the steel sheet may increase to deteriorate a welding property. In detail, 0.0001 to 0.0500 wt% of P may be included.

0.003 wt% or less of C

Carbon (C) may react to N, Ti, Nb, and V to form fine carbide and may serve to inhibit grain growth and magnetic domain movement to degrade magnetism. In detail, 0.0001 to 0.0025 wt% of C may be included.

0.004 wt% or less of S

Sulfur (S) forms sulfide such as MnS, and may suppress grain growth to deteriorate magnetism. In detail, 0.0001 to 0.0030 wt% of S may be included.

0.003 wt% or less of of Ti

Titanium (Ti) may form carbonitride and may serve to hinder the magnetic domain movement so it may be limited. In detail, 0.0001 to 0.0025 wt% of Ti may be included.

0.003 wt% or less of N

Nitrogen (N) may be combined to Ti, Nb, and V to form nitride, and may deteriorate grain growth. In detail, 0.0001 to 0.0025 wt% of N may be included.

The non-oriented electrical steel sheet may further include 0.005 to 0.200 wt% of one or more of Sn, Sb, Bi, Pb, Ge, and As individually or as a summed content thereof.

When the above-noted elements are added, they may be segregated at the grain boundary, thereby relieving the concentration of stress at the grain boundary during cold rolling, and suppressing the recrystallization of orientation grains of <111>//ND in the post-process that is recrystallization annealing, thereby improving the flux density. When these are added appropriately, the aforementioned effects may be additionally obtained, but when they are included very much, a large amount of segregation may occur, suppressing the grain growth and deteriorating the flux density and iron loss. In detail, 0.010 to 0.100 wt% of one or more of Sn, Sb, Bi, Pb, Ge, and As may be further included individually or as a summed content thereof.

The non-oriented electrical steel sheet may further include at least one of 0.03 wt% or less of Mo, 0.0050 wt% or less of B, 0.0050 wt% or less of V, 0.0050 wt% or less of Ca, 0.0050 wt% or less of Nb, and 0.0050 wt% or less of Mg.

They may react with the inevitably included C, S, N, etc. to form fine carbide, nitride, or sulfide, which may adversely affect magnetism, so the upper limit may be restricted as described above.

Other impurities

In addition to the elements mentioned above, impurities that are inevitably mixed in may be included. The inevitable impurities are mixed in during the steelmaking process and the process for manufacturing non-oriented electrical steel sheets, which is widely known in the field, and a detailed description thereof will be omitted. In addition to the alloy component described above in an embodiment, the addition of elements is not excluded, and the elements may be included in various ways within a range that does not harm the technical idea of the present disclosure. When additional elements are further included, they are included to replace the balance, Fe.

Regarding the non-oriented electrical steel sheet, an area fraction of <111>//ND grains is 20% or less, and a ratio of the area fraction of <100>//ND grains to the area fraction <110>//ND grains is 1.01 or more.

Here, the <100>//ND grains represent grains whose <100> axis is within a range of 15 degrees from a vertical axis (ND) of a surface of the steel sheet, the <111>//ND grains represent grains whose <111> axis is within the range of 15 degrees from the vertical axis (ND) of the surface of the steel sheet, and the <110>//ND grains represent grains whose <110> axis is within the range of 15 degrees from the vertical axis (ND) of the surface of the steel sheet. The area fraction refers to the ratio of the area occupied by grains of a specific orientation to the entire area of the steel sheet as measured by electron backscatter diffraction (EBSD). The EBSD is usually mounted on a scanning electron microscope, for example, an EBSD measuring device by TSL may be mounted on a JEOL JSM-7200F device. The range within 15 degrees represents that the angle between the vertical axis of the surface of the steel sheet and any surface including the corresponding orientation is within 15 degrees, and this may be measured using orientation imaging microscopy (OIM) of the EBSD by TSL.

In this way, when appropriately controlling the orientation of the grains, the magnetism may be improved more uniformly for the entire directions of the steel sheet.

In an embodiment, regarding the grain orientation and the area fraction thereof, the steel sheet is incised in parallel to a thickness direction of the sheet to perform an electron backscatter diffraction (EBSD) measurement on a center portion of the incised surface and analyze the crystal orientation of the grains, and a measurement gap is 2 $\mu$m, and the entire measured area is 3000 $\mu$m $\times$ 3000 $\mu$m.

The non-oriented electrical steel sheet has a body centered cubic as a basic crystal structure, and has a crystal orientation that is easily magnetized by an externally applied magnetic field. As a result of measuring the magnetization characteristics by crystal orientations, it is the easiest to magnetize when the crystal orientation is <001> orientation, and it is the most difficult to magnetize when the crystal orientation is <111> orientation. That is, it signifies that, when the grain orientation is <100>//ND rather than <111>//ND, a higher flux density may be exhibited in the same applied magnetic field.

Therefore, when there are many <111>//ND grains in the steel sheet, magnetization does not occur easily by the external magnetic field, so the flux density is deteriorated and the iron loss increases to fail to meet the desired motor efficiency, so it is preferable to minimize this. In the present disclosure, the area fraction of the <111>//ND grains is equal to or less than 20%. In detail, the area fraction of <111>//ND grains may be equal to or less than 15%, and the smaller the fraction is, the more advantageous it is for magnetism, so the lower limit (excluding 0%) is not restricted. In detail, the area fraction of <111>//ND grains may be 5 to 19%, and more specifically, the area fraction of <111>//ND grains may be 10 to 15%.

The ratio (<100>/<110>) of the area fraction of <100>//ND grains to the area fraction of <110>//ND grains may be 1.01 or greater.

The <110>//ND grains are not as difficult to magnetize as the <111>//ND grains, but have large magnetism deviation in the rolling direction and the direction perpendicular to rolling, which is disadvantageous for securing uniform magnetism in the entire direction of the steel sheet. However, the <110>//ND grains are more advantageous than the <111>//ND grains in securing flux density and low iron loss characteristics, so it is necessary to control them with an appropriate fraction.

Therefore, to secure uniform magnetism in the entire directions of the steel sheet, magnetism may be further improved by increasing the ratio of <100>//ND grains and decreasing the ratio of <110>//ND grains, and it is preferable to establish the ratio (<100>/<110>) of the area fraction of <100>//ND grains to the area fraction of <110>//ND grains to be 1.01 or higher. In detail, it may be equal to or greater than 1.04, and the higher the ratio is, the more advantageous it is for magnetism, so it does not impose an upper limit. In detail, it may be 1.10 to 1.9.

When there are many <100>//ND grains in the steel sheet, it may show high flux density and low iron loss characteristics due to the external magnetic field, which may greatly improve the efficiency of the motor. In an embodiment, the area fraction of <100>//ND grains may be 10% or more. In detail, the area fraction of <100>//ND grains may be 20% or more, and the higher the fraction is, the more advantageous it is for magnetism, so there is no upper limit. In detail, the area fraction of <100>//ND grains may be 20% to 50%.

In an embodiment, the grains having a specific orientation are formed, and magnetism is uniformly excellent for the entire directions.

In detail, the non-oriented electrical steel sheet may satisfy at least one of Equation 1 to Equation 3.

$$[\text{Equation 1}]$$

$$(B50_L + B50_C) / 2 \geq 1.63$$

$$[\text{Equation 2}]$$

$$\{(B50_L + B50_C + B50_{60}) / 3\} / \{ (B50_L + B50_C) / 2\} \geq 0.95$$

$$[\text{Equation 3}]$$

$$B50_{60} / \{(B50_L + B50_C) / 2\} \geq 0.90$$

(in Equation 1 to Equation 3, $B50_L$ is flux density (B50, Tesla) measured in the rolling direction, B50c is flux density (B50, Tesla) measured in the vertical direction to the rolling direction, and $B50_{60}$ is flux density (B50, Tesla) measured in the direction forming 60° from the rolling direction.

B50 represent flux density induced from the magnetic field of 5000A/m.

Equation 1 shows a general method for estimating flux density of the non-oriented electrical steel sheet, and represents a mean value of the flux density B50 in the rolling direction (L) and the vertical rolling direction (C).

Equation 2 represents dividing the mean value of the flux density B50 measured in the rolling direction (L) of the steel sheet, the vertical direction (C), and the direction forming the angle of 60 degrees with respect to the rolling direction by the mean value of Equation 1, signifying that the flux density in the direction forming the angle of 60 degrees in addition to the rolling direction (L) and the vertical direction (C) is excellent. That is, the magnetism is excellent in the entire directions of the steel sheet so the flux density $B50_{60}$ is high even in the 60-degrees direction which is known to be the most deteriorated flux density. Therefore, according to the present disclosure, the ratio of the mean value of the flux density in the rolling direction and the vertical direction of the electrical steel sheet manufactured by the existing method is higher than the ratio of the mean value of the flux density $B50_{60}$ including the 60-degrees direction.

Equation 3 represents dividing the flux density $B50_{60}$ of the steel sheet measured in the direction forming the angle of 60 degrees by the mean value of flux density in the rolling direction (L) of the steel sheet and the vertical direction (C) thereof, so the flux density is high in the entire directions of the steel sheet, signifying that it is higher than the ratio of the flux density $B50_{60}$ of the steel sheet manufactured according to prior art in the direction forming the angle of 60 degrees and Equation 1. The existing double annealing and double rolling method increases the flux density in the rolling direction of the steel sheet and its vertical direction by developing the {100}<001> exact cube texture and the {110}<001> Goss texture, but the flux density in the 60-degrees direction with respect to the rolling direction is highly deteriorated, so it may not be evaluated that the magnetic characteristics are excellent in the entire directions of the steel sheet. As in the present disclosure, it is possible to manufacture the non-oriented electrical steel sheet for drive motors having excellent flux density not only in the rolling direction and the vertical direction of the steel sheet but also in the 60-degrees direction from the rolling direction by applying the optimal resistivity-enhancing alloy component and high-temperature hot rolling and winding, and the step-by-step cold reduction ratio and rapid increase temperature technology in intermediate annealing to increase the area fraction of <100>//ND grains in the steel sheet.

The non-oriented electrical steel sheet may satisfy Equation 4.

[Equation 4]

$$(W10/400_L + W10/400_C) / 2 \le 6.885 \times e^{(2.99 \times t)}$$

(here, $W10/400_L$ is the iron loss (W10/400, W/kg) measured in the rolling direction, W10/400c is the iron loss (W10/400, W/kg) measured in the rolling vertical direction, e is Euler's number, and t is the thickness (mm) of the electrical steel sheet.)

W10/400 is the iron loss when the flux density of 1.0 T is induced at a frequency of 400 Hz.

Equation 4 may secure excellent flux density in the entire directions of the steel sheet by Equations 1 to 3, and thus greatly reduces iron loss and increases motor efficiency. This iron loss characteristic is affected not only by the flux density characteristic but also by the thickness of the steel sheet. Therefore, it means the iron loss that may be secured in the steel sheet exhibiting excellent flux density in the entire directions of the steel sheet, as in the present disclosure, depending on the thickness of the steel sheet.

A method for manufacturing a non-oriented electrical steel sheet according to an embodiment may include: hot rolling a slab including 2.5 to 4.0% of Si, 0.03 to 2.0% of Al, and 0.03 to 2.0% of Mn as wt% and including a balance of Fe and inevitable impurities to manufacture a hot rolled plate; preliminarily cold rolling the hot rolled plate at 20 to 80% to manufacture a preliminary cold-rolled steel sheet; heating and annealing the preliminary cold-rolled steel sheet at an increase temperature rate of 20°C/s or more to thus perform an intermediate annealing; cold rolling the intermediately annealed preliminary cold-rolled steel sheet at a reduction ratio of 30 to 80% to manufacture a cold-rolled steel sheet; and annealing the cold-rolled steel sheet to thus perform a cold-rolled steel sheet annealing.

Respective stages will now be explained in detail.

A slab is manufactured. The reason for limiting the addition ratio of respective compositions in the slab is the same as the reason for limiting the compositions of the non-oriented electrical steel sheet described above, so the repeated descriptions will be omitted. The compositions of the slab are not changed substantially in the manufacturing processes such as hot rolling, hot rolled plate annealing, preliminary cold rolling, first annealing, cold rolling, and second annealing to be described later, so the composition of the slab and the composition of the non-oriented electrical steel sheet are substantially the same.

The slab may be heated at 1100°C or higher prior to the manufacturing of the hot rolled plate. In detail, the slab is placed in a heating furnace and is heated at 1100 to 1250°C. When heated at the temperature exceeding 1250°C, the deposition may be re-dissolved and may be minutely precipitated after hot rolling.

The heated slab is hot rolled to 1.5 to 4.0 mm to manufacture a hot rolled plate. In an embodiment, preliminary cold rolling is included before cold rolling, so that the non-oriented electrical steel sheet with appropriate thickness may be manufactured when the hot rolled plate is relatively thick. In detail, the thickness of the hot rolled plate may be 1.5 to 3.5 mm.

The manufacturing of a hot rolled plate may include finish-rolling at the temperature of 850°C or higher.

When the finish rolling temperature of hot rolling is very low, a rolling load increases and hot rolling workability decreases. A lot of deformed structures remain in the hot rolled steel sheet, which may cause an increase of the rolling load during the preliminary cold rolling process. In addition, recrystallization of <111>//ND orientation grains from the deformed structures is promoted during intermediate annealing, resulting in deterioration of the flux density. Therefore, the higher the hot rolling finish rolling temperature is, the better it is, and in detail, it is preferable to finish rolling at the temperature of 860 to 1000°C.

The manufacturing of a hot rolled plate may include performing water cooling after a time of 0.1 second or more passes after the finish rolling.

Cooling for winding is performed after the finish rolling, and when performing water cooling, if water cooling is performed after the finish rolling (i.e., for less than 0.1 seconds), the steel sheet may become quenched, causing deformation of the steel sheet and generating residual stresses, and thereby making winding difficult. In addition, from the microstructure perspective, deformation stress after the finish rolling is not released and remains as it is, which may lead to an increase in the rolling load in the subsequent cold rolling, and fine recrystallization of the <111>//ND orientation. Therefore, maintaining the hot rolling deformed structure for more than 0.1 second immediately after hot rolling finish rolling so that it may be recovered and recrystallized may reduce the rolling load during the subsequent preliminary cold rolling and may suppress the generation of <111>//ND orientation recrystallized grains. In detail, it may be water-cooled after 0.3 to 5.0 seconds, and more specifically, it may be water-cooled after 0.5 to 3.0 seconds.

The manufacturing of the hot rolled plate may include winding at the temperature of 600 to 800°C. A pre-rolling may also be included before the finish rolling.

When the temperature is controlled to be very low during the winding, recovery of the hot rolling deformed structure and recrystallization may not be properly generated, and the cooling load may increase in order to quickly cool the steel sheet at a low temperature, which may cause difficulties in winding the supercooled coil. Conversely, when the temperature is very high, recovery and recrystallization may be promoted, but additional oxidation due to atmospheric oxygen may occur while winding, which may cause thicker formation of scale and intergranular oxidation problems. The intergranular oxidation of hot rolled plates may promote grain boundary corrosion during the subsequent pickling process, which increases the possibility of surface stripe defects and severe wear of the rolling roll. Therefore, it is desired to perform winding at the temperature of 600 to 800°C, and in detail, winding may be performed at 600 to 750°C.

It is most preferable to proceed with pickling and preliminary cold rolling after manufacturing the hot rolled plate, but it may be further include annealing the hot rolled plate at the temperature range of 600 to 1100°C after the manufacturing of the hot rolled plate. When the temperature of annealing the hot rolled plate is very low, the recrystallization structure may not be formed or may grow minutely, which may result in little increase in flux density, and when the annealing temperature is very high, the magnetic characteristics may deteriorate, and the rolling workability may deteriorate due to deformation of the plate shape. In detail, the temperature range may be 700 to 1050°C.

Hot rolled plate annealing is performed to increase the orientation favorable to magnetism as needed, and may be omitted. The annealing form is not particularly limited, and batch or continuous annealing is possible.

The hot rolled plate may be pickled as needed.

The hot rolled plate is subjected to preliminary cold rolling at a rate of 20 to 80% to manufacture a preliminary cold-rolled steel sheet.

The preliminary cold rolling may be progressed by a pickling & cold rolling mill (PCM) including a pickling process for increasing rolling productivity or a tandem cold rolling mill (TCM) performing cold rolling, and it may be performed within the range of the reduction ratio of 20 to 80% for increasing final cold rolling productivity and <100>//ND grain fraction of the final product of sheet. The present disclosure also shows that preliminary cold rolling may be performed by a reverse mill when rolling productivity is not taken into consideration.

The preliminary cold rolling is distinguished from cold rolling, which will be described later, in that it is the first rolling stage of a process for involving rolling to an intermediate thickness, not the final product thickness, and then performing intermediate annealing, and cold rolling to the final product thickness.

The preliminary cold reduction ratio may be obtained by (steel sheet thickness before rolling - steel sheet thickness after rolling) / steel sheet thickness before rolling. When the reduction ratio is very low in the preliminary cold rolling, the rolling load may increase during the final cold rolling, which reduces productivity and increases the final reduction ratio, and may accordingly cause problems such as promoting fine <111>//ND orientation recrystallization. When the reduction ratio is very high, the cold rolling load increases and the possibility of strip breakage also increases.

Therefore, it is preferable that the reduction ratio in the preliminary cold rolling is performed within the range of 20 to 80%, and in detail, the lower limit of the reduction ratio may be 20%, 30%, 40%, 50%, 60%, 70% or 80%. The upper limit of the reduction ratio may be 80%, 70%, 60%, 50%, 40%, 30%, or 20%.

The manufacturing of a preliminary cold-rolled steel sheet may be performed at the temperature of 60 to 300°C. This temperature of the steel sheet may be increased due to friction between the steel sheet and the rolling roll or by applying heat from the outside. When the temperature is very low, the rolling load increases significantly and the steel sheet may slip between the rolling rolls instead of rolling, which may cause problems such as twisting. When the temperature is very high, Si and Al oxidation may occur on the surface of steel sheet, which may cause degradation of magnetism and problems such as ignition of rolling oil. When the temperature is very high, oxidation of Si and Al may occur on the surface of steel sheet, magnetism may deteriorate, and problems such as rolling oil ignition may occur. In detail, it is preferably performed at the temperature of 70 to 250°C.

Intermediate annealing is performed by the heating preliminary cold-rolled steel sheet at the increase temperature rate of 20°C/s or higher. In an embodiment, the high increase temperature rate promotes recrystallization of <100>//ND orientation, ultimately enhancing magnetism. When the increase temperature speed is very low, the recrystallization of the <111>//ND orientation is promoted, making it difficult to sufficiently obtain the aforementioned effect. It is difficult to control the increase temperature rate of 500°C/s or higher, and it is difficult to secure a uniform microstructure because the temperature increases to be higher than the target annealing temperature. In detail, it may be heated to 30°C/s to 500°C/s. The aforementioned increase temperature rate may be measured in a temperature range from a starting temperature of 100°C to an ending temperature of 600°C.

The aforementioned increase temperature rate may be measured in a temperature range from the starting temperature of 100°C to the ending temperature of 600°C.

The intermediate annealing may be performed in the temperature range of 600 to 1100°C. When the annealing temperature is very low, the grain size becomes finer and the grain boundary increases, which increases the <111>//ND 'orientation recrystallization nuclei at the grain boundary during the final cold rolling, ultimately resulting in deterioration of the flux density. When the annealing temperature is very high, grains may increase significantly, which may lead to increased strip breakage due to cracks occurring at the grain boundaries during the final cold rolling. Preferably, it may be annealed specifically at 750 to 1050°C.

After intermediate annealing, the annealing sheet may be pickled as required. The pickling method is widely known to a skilled person in the art, so a detailed explanation is omitted.

The cold rolling cold rolls the preliminary cold-rolled steel sheet that has undergone intermediate annealing at the reduction ratio of 30 to 80%.

When the reduction ratio is very low, the strain energy accumulated in the rolled steel sheet is small, making it difficult to recrystallize in the subsequent annealing process, so the rolled structure remains, which may cause problems in improving flux density and iron loss. When the reduction ratio is very high, the recrystallization of <111>//ND orientation grains may be promoted during the subsequent annealing process, and the grains may become finer, resulting in deteriorated flux density and increased iron loss. In detail, the lower limit of the reduction ratio may be 30%, 40%, 50%, 60%, 70% or 80%. The upper limit of the reduction ratio may be 80%, 70%, 60%, 50%, 40%, or 30%.

The annealing of the cold-rolled steel sheet may be performed at the temperature of 600 to 1200°C. When the annealing temperature is very low, recrystallization of <111>//ND orientation grains is promoted, and the grains become finer, making it impossible to secure excellent flux density characteristics. When the annealing temperature is very high, the grains grow coarsely, which increases iron loss, and an oxide layer or a nitride layer may be generated on the surface of the steel sheet from annealing atmosphere gas, which also increases iron loss. In detail, it may be annealed at 750 to 1100°C.

After the cold-rolled steel sheet annealing, it may further include forming an insulating film to secure insulation and corrosion resistance to the steel sheet. The insulating film is widely known, a detailed description thereof will be omitted.

Embodiments and comparative examples will now be described. However, the following embodiments are preferable embodiments and the present disclosure is not limited to them.

## Embodiment 1

A slab as composed in Table 1 is manufactured. Along with the components listed in Table 1, 0.01% of P, 0.0020% of C, 0.0025% of S, 0.0020% of N, 0.0025% of Ti, 0.02% of Cu, 0.04% of Cr, and 0.02% of Ni are added in wt%, and 0.002% or less of each of Zn, Mo, B, Ca, Mg, Nb, V, etc. are added, and the balance is Fe.

The slab is heated at 1150°C, is hot finish rolled at 920°C, is water-cooled after one second, and is wound at 650°C to produce the hot rolled plate. The hot rolled plate is subjected to pickling and preliminary cold rolling. The preliminary cold rolling is performed at the temperature of 85°C with the reduction ratio summarized in Table 1, and intermediate annealing was performed at 1000°C for 30 seconds by heating with the increase temperature rates summarized in Table 1. The intermediate annealed steel sheet was finally cold rolled at the secondary reduction ratio listed in Table 1 to manufacture a cold-rolled steel sheet with the thickness listed in Table 1. The final annealing was performed in a dried hydrogen and nitrogen gas atmosphere at 950°C for 60 seconds.

After cold-rolled steel sheet annealing, grain orientation of the steel sheet is measured using electron backscatter diffraction (EBSD), and the fraction for each orientation is summarized in Table 2.

The magnetic characteristics are measured by preparing Epstein specimens at each angle using an Epstein tester, and the results are summarized in Tables 2 and 3.

[Table 1]

| Division | Si(wt%) | Al(wt%) | Mn(wt%) | Preliminary cooling reduction ratio (%) | Intermediate annealing temperature increase rate (°C/s) | Cold rolling reduction ratio (%) | Thickness of cold-rolled steel sheet(mm) |
|---|---|---|---|---|---|---|---|
| 1 | 3.0 | 0.40 | 0.65 | 80 | 50 | 50 | 0.25 |
| 2 | 3.6 | 0.40 | 1.90 | 72 | 50 | 64 | 0.25 |
| 3 | 2.9 | 0.20 | 0.25 | 68 | 100 | 75 | 0.25 |
| 4 | 2.9 | 0.50 | 0.30 | 52 | 100 | 79 | 0.25 |
| 5 | 3.0 | 0.70 | 1.00 | 52 | 50 | 78 | 0.27 |
| 6 | 3.3 | 0.50 | 0.40 | 60 | 50 | 73 | 0.27 |
| 7 | 3.6 | 1.70 | 0.90 | 68 | 100 | 66 | 0.27 |
| 8 | 3.0 | 1.50 | 0.15 | 72 | 100 | 61 | 0.27 |
| 9 | 3.4 | 1.50 | 0.05 | 80 | 200 | 46 | 0.27 |
| 10 | 3.3 | 0.30 | 1.30 | 60 | 50 | 80 | 0.20 |
| 11 | 3.7 | 0.60 | 1.40 | 72 | 100 | 71 | 0.20 |

(continued)

| Division | Si(wt%) | Al(wt%) | Mn(wt%) | Preliminary cooling reduction ratio (%) | Intermediate annealing temperature increase rate (°C/s) | Cold rolling reduction ratio (%) | Thickness of cold-rolled steel sheet(mm) |
|---|---|---|---|---|---|---|---|
| 12 | 3.5 | 0.50 | 1.60 | 80 | 200 | 60 | 0.20 |
| 13 | 1.9 | 0.50 | 0.20 | 72 | 50 | 71 | 0.20 |
| 14 | 4.3 | 0.90 | 0.35 | 80 | 50 | 60 | 0.20 |
| 15 | 2.5 | 0.02 | 0.85 | 72 | 50 | 61 | 0.27 |
| 16 | 2.8 | 2.10 | 0.25 | 80 | 50 | 46 | 0.27 |
| 17 | 2.5 | 1.50 | 0.02 | 72 | 50 | 61 | 0.27 |
| 18 | 3.0 | 0.20 | 2.20 | 80 | 50 | 46 | 0.27 |
| 19 | 3.1 | 0.50 | 0.40 | 12 | 50 | 88 | 0.27 |
| 20 | 3.1 | 0.50 | 0.40 | 84 | 50 | 33 | 0.27 |
| 21 | 3.1 | 0.50 | 0.40 | 60 | 15 | 75 | 0.25 |
| 22 | 3.1 | 0.50 | 0.40 | 88 | 50 | 17 | 0.25 |
| 23 | 3.1 | 0.50 | 0.40 | 40 | 50 | 83 | 0.25 |

[Table 2]

| Division | <100>//N D (%) | <111>//N D (%) | <110>//N D (%) | <100>/ <110> ratio | $B50_L$ (Tesla) | $B50_C$ (Tesla) | $B50_{60}$ (Tesla) |
|---|---|---|---|---|---|---|---|
| 1 | 33 | 10 | 24 | 1.38 | 1.68 | 1.63 | 1.57 |
| 2 | 41 | 12 | 28 | 1.46 | 1.73 | 1.65 | 1.58 |
| 3 | 30 | 17 | 21 | 1.43 | 1.75 | 1.63 | 1.57 |
| 4 | 35 | 19 | 31 | 1.13 | 1.72 | 1.66 | 1.59 |
| 5 | 26 | 16 | 25 | 1.04 | 1.77 | 1.70 | 1.58 |
| 6 | 35 | 14 | 25 | 1.40 | 1.75 | 1.72 | 1.60 |
| 7 | 21 | 11 | 15 | 1.40 | 1.72 | 1.71 | 1.63 |
| 8 | 29 | 10 | 27 | 1.07 | 1.77 | 1.70 | 1.61 |
| 9 | 45 | 11 | 24 | 1.88 | 1.81 | 1.74 | 1.60 |
| 10 | 34 | 15 | 23 | 1.48 | 1.65 | 1.61 | 1.55 |
| 11 | 20 | 14 | 14 | 1.43 | 1.67 | 1.60 | 1.58 |
| 12 | 40 | 11 | 31 | 1.29 | 1.70 | 1.63 | 1.62 |
| 13 | 39 | 16 | 31 | 1.26 | 1.83 | 1.60 | 1.53 |
| 14 | 25 | 9 | 22 | 1.14 | 1.64 | 1.59 | 1.51 |
| 15 | 37 | 10 | 25 | 1.48 | 1.79 | 1.65 | 1.53 |
| 16 | 41 | 13 | 30 | 1.37 | 1.66 | 1.55 | 1.50 |
| 17 | 22 | 8 | 20 | 1.10 | 1.65 | 1.52 | 1.50 |
| 18 | 24 | 10 | 23 | 1.04 | 1.66 | 1.54 | 1.48 |
| 19 | 7 | 34 | 7 | 1.00 | 1.65 | 1.58 | 1.55 |
| 20 | 17 | 25 | 16 | 1.06 | 1.66 | 1.57 | 1.53 |
| 21 | 45 | 22 | 8 | 5.63 | 1.77 | 1.72 | 1.51 |

(continued)

| Division | <100>//N D (%) | <111>//N D (%) | <110>//N D (%) | <100>/ <110> ratio | B50$_L$ (Tesla) | B50$_C$ (Tesla) | B50$_{60}$ (Tesla) |
|---|---|---|---|---|---|---|---|
| 22 | 15 | 35 | 14 | 1.07 | 1.63 | 1.58 | 1.50 |
| 23 | 6 | 21 | 35 | 0.17 | 1.84 | 1.62 | 1.43 |

[Table 3]

| Division | W10/400L (W/kg) | W10/400C (W/kg) | Left side value of Equation 1 | Left side value of Equation 2 | Left side value of Equation 3 | Mean iron loss (W/kg) | Satisfying Equation 4 | Notes |
|---|---|---|---|---|---|---|---|---|
| 1 | 12.1 | 13.9 | 1.66 | 0.98 | 0.95 | 13.0 | Satisfied | Embodiment |
| 2 | 11.5 | 13.2 | 1.69 | 0.98 | 0.93 | 12.4 | Satisfied | Embodiment |
| 3 | 11.2 | 12.9 | 1.69 | 0.98 | 0.93 | 12.1 | Satisfied | Embodiment |
| 4 | 11.5 | 12.9 | 1.69 | 0.98 | 0.94 | 12.2 | Satisfied | Embodiment |
| 5 | 12.3 | 13.7 | 1.74 | 0.97 | 0.91 | 13.0 | Satisfied | Embodiment |
| 6 | 12.4 | 13.2 | 1.74 | 0.97 | 0.92 | 12.8 | Satisfied | Embodiment |
| 7 | 12.8 | 13.1 | 1.72 | 0.98 | 0.95 | 13.0 | Satisfied | Embodiment |
| 8 | 12.2 | 13.3 | 1.74 | 0.98 | 0.93 | 12.8 | Satisfied | Embodiment |
| 9 | 11.9 | 12.9 | 1.78 | 0.97 | 0.90 | 12.4 | Satisfied | Embodiment |
| 10 | 10.8 | 13.5 | 1.63 | 0.98 | 0.95 | 12.2 | Satisfied | Embodiment |
| 11 | 10.9 | 13.4 | 1.64 | 0.99 | 0.97 | 12.2 | Satisfied | Embodiment |
| 12 | 10.5 | 13.0 | 1.67 | 0.99 | 0.97 | 11.8 | Satisfied | Embodiment |
| 13 | 12.4 | 15.1 | 1.72 | 0.96 | 0.89 | 13.8 | Not satisfied | Comparative Example |
| 14 | 11.4 | 13.7 | 1.62 | 0.98 | 0.93 | 12.6 | Not satisfied | Comp arative Example |
| 15 | 12.1 | 19.2 | 1.72 | 0.96 | 0.89 | 15.7 | Not satisfied | Comp arativ e Exam ple |
| 16 | 14.2 | 17.4 | 1.61 | 0.98 | 0.93 | 15.8 | Not satisfied | Comp arativ e Exam ple |
| 17 | 14.1 | 17.8 | 1.59 | 0.98 | 0.95 | 16.0 | Not satisfied | Comparative Example |
| 18 | 13.7 | 17.6 | 1.60 | 0.98 | 0.93 | 15.7 | Not satisfied | Comparative Exam ple |
| 19 | 13.5 | 18.6 | 1.62 | 0.99 | 0.96 | 16.1 | Not satisfied | Comp arativ e Exam ple |
| 20 | 13.1 | 18.4 | 1.62 | 0.98 | 0.95 | 15.8 | Not satisfied | Comp arativ e Exam ple |
| 21 | 11.3 | 12.5 | 1.75 | 0.96 | 0.87 | 11.9 | Satisfied | Comp arativ e Exam ple |
| 22 | 13.6 | 15.9 | 1.61 | 0.98 | 0.93 | 14.8 | Not satisfied | Comp arativ e Exam ple |
| 23 | 10.7 | 18.5 | 1.73 | 0.94 | 0.83 | 14.6 | Not satisfied | Comp arativ e Exam ple |

As expressed in Table 1 to Table 3, the examples in which the preliminary cold rolling reduction ratio, the increase temperature rate, and the final cold rolling reduction ratio conditions are properly controlled have a high <100>//ND fraction, and the <111>//ND and <110>//ND fractions are controlled so it may be confirmed that the magnetism is uniformly excellent for the entire directions.

**Embodiment 2**

Hot rolling was performed on the slab having the same composition as No. 6 shown in Table 1 of Embodiment 1. The slab is heated at 1200°C, and the hot rolled plate with the thickness of 3.0mm is manufactured by changing the hot finishing temperature, the maintain time before water cooling after finish rolling ends, and the winding temperature. The hot rolled hot rolled plate underwent preliminary cold rolling at the temperature condition of 100°C to 0.7 mm with the reduction ratio of 76.7%. The temperature is increased up to 950°C at the temperature increasing rate of 50°C/s, and then intermediate annealing was performed for ten seconds. The intermediately annealed steel sheet was then finally cold rolled to the thickness of 0.25 mm with the secondary reduction ratio of 64%. The final annealing was performed at 1050°C for twenty seconds by increasing the temperature at the temperature increasing rate of 100°C/s. The magnetic characteristic and grain orientation fraction analysis of the final product are performed using the same method as in Embodiment 1 and are shown in Tables 4 and 5.

[Table 4]

| Division | Finish rolling temperature(°C) | Maintain time before Water cooling (sec) | Winding temperature (°C) | <100>// ND (%) | <111>// ND (%) | <110>// ND (%) | <100>/ <110> ratio |
|---|---|---|---|---|---|---|---|
| 1 | 820 | 0.50 | 620 | 9 | 32 | 27 | 0.33 |
| 2 | 860 | 0.50 | 620 | 22 | 18 | 19 | 1.16 |
| 3 | 900 | 0.50 | 620 | 30 | 17 | 21 | 1.43 |
| 4 | 1000 | 0.50 | 620 | 35 | 14 | 24 | 1.46 |
| 5 | 920 | 0.70 | 700 | 27 | 15 | 19 | 1.42 |
| 6 | 920 | 1.00 | 680 | 29 | 14 | 21 | 1.38 |
| 7 | 900 | 3.00 | 620 | 41 | 14 | 30 | 1.37 |
| 8 | 900 | 5.00 | 650 | 28 | 18 | 18 | 1.56 |
| 9 | 950 | 1.50 | 600 | 33 | 12 | 25 | 1.32 |
| 10 | 920 | 2.00 | 650 | 36 | 15 | 28 | 1.29 |
| 11 | 920 | 2.00 | 700 | 31 | 11 | 22 | 1.41 |
| 12 | 900 | 2.00 | 750 | 45 | 17 | 20 | 2.25 |
| 13 | 920 | 0.01 | 620 | 9 | 35 | 14 | 0.64 |
| 14 | 920 | 1.00 | 550 | 12 | 24 | 38 | 0.32 |
| 15 | 1000 | 1.70 | 820 | 9 | 25 | 10 | 0.90 |

[Table 5]

| Division | B50$_L$ (Tesla) | B50c (Tesla) | B50$_{60}$ (Tesla) | Value of Equation 1 | Value of Equation 2 | Value of Equation 3 | Notes |
|---|---|---|---|---|---|---|---|
| 1 | 1.75 | 1.50 | 1.45 | 1.63 | 0.96 | 0.89 | Comparative Example |
| 2 | 1.68 | 1.65 | 1.58 | 1.67 | 0.98 | 0.95 | Embodiment |
| 3 | 1.72 | 1.65 | 1.60 | 1.69 | 0.98 | 0.95 | Embodiment |
| 4 | 1.75 | 1.66 | 1.61 | 1.71 | 0.98 | 0.94 | Embodiment |
| 5 | 1.69 | 1.64 | 1.59 | 1.67 | 0.98 | 0.95 | Embodiment |
| 6 | 1.71 | 1.65 | 1.60 | 1.68 | 0.98 | 0.95 | Embodiment |

(continued)

| Divisi on | $B50_L$ (Tesla) | B50c (Tesla) | $B50_{60}$ (Tesla) | Value of Equation 1 | Value of Equation 2 | Value of Equation 3 | Notes |
|---|---|---|---|---|---|---|---|
| 7 | 1.75 | 1.68 | 1.58 | 1.72 | 0.97 | 0.92 | Embodi ment |
| 8 | 1.68 | 1.62 | 1.54 | 1.65 | 0.98 | 0.93 | Embodi ment |
| 9 | 1.72 | 1.64 | 1.60 | 1.68 | 0.98 | 0.95 | Embodi ment |
| 10 | 1.73 | 1.63 | 1.59 | 1.68 | 0.98 | 0.95 | Embodi ment |
| 11 | 1.71 | 1.65 | 1.59 | 1.68 | 0.98 | 0.95 | Embodi ment |
| 12 | 1.77 | 1.62 | 1.56 | 1.70 | 0.97 | 0.92 | Embodi ment |
| 13 | 1.63 | 1.55 | 1.50 | 1.59 | 0.98 | 0.94 | Compar ative Example |
| 14 | 1.84 | 1.60 | 1.43 | 1.72 | 0.94 | 0.83 | Compar ative Example |
| 15 | 1.63 | 1.57 | 1.55 | 1.60 | 0.99 | 0.97 | Compar ative Example |

As can be seen in Table 4 and Table 5, the finishing hot rolling temperature is finished at 850°C or higher, and when the recovery and recrystallization of the hot rolling structure is promoted by maintaining it for at least 0.1 second immediately after rolling, the <111>//ND structure fraction in the final steel sheet after cold rolling is reduced, securing excellent flux density characteristics for the entire directions of the steel sheet. It may be confirmed that in order to secure the hot-rolled structure with this type of recovery and recrystallization, the coil must be wound in the temperature range of 600 to 800 °C.

The present disclosure is not limited to the embodiments and may be produced in various forms, and it will be understood by those skilled in the art to which the present disclosure pertains that embodiments of the present disclosure may be implemented in other specific forms without modifying the technical spirit or essential features of the present disclosure. Therefore, it should be understood that the aforementioned embodiments are illustrative in terms of all aspects and are not limited.

**Claims**

1.    A non-oriented electrical steel sheet comprising:

2.5 to 4.0% of Si, 0.03 to 2.0% of Al, and 0.03 to 2.0% of Mn in wt%, a balance of Fe, and inevitable impurities, wherein an area fraction of <111>//ND grains is 20% or less, and
a ratio of the area fraction of <100>//ND grains to the area fraction of <110>//ND grains is 1.01 or greater (here, a <100> axis of the <100>//ND grains is within a range of 15 degrees from a vertical axis (ND) on a surface of the steel sheet, a <111> axis of the <111>//ND grains is within the range of 15 degrees from the vertical axis (ND) on the surface of the steel sheet, and a <110> axis of the <110>//ND grains is within the range of 15 degrees from a vertical axis (ND) on a surface of the steel sheet).

2.    The non-oriented electrical steel sheet of claim 1, wherein
the area fraction of the <100>//ND grains is 10% or greater.

3.    The non-oriented electrical steel sheet of claim 1, further comprising
at least one of 0.005 to 0.2 wt% of Cu, 0.01 to 0.5 wt% of Cr, 0.05 wt% or less of Ni (excluding 0%), and 0.01 wt% or less of Zn (excluding 0%).

4.    The non-oriented electrical steel sheet of claim 1, further comprising
at least one of 0.1 wt% or less of P (excluding 0%), 0.003 wt% or less of C (excluding 0%), 0.004 wt% or less of S (excluding 0%), 0.003 wt% or less of Ti (excluding 0%), and 0.003 wt% or less of N (excluding 0%).

5.    The non-oriented electrical steel sheet of claim 1, further comprising
0.005 to 0.200 wt% of one or more of Sn, Sb, Bi, Pb, Ge, and As individually or as a summed content thereof.

6.    The non-oriented electrical steel sheet of claim 1, further comprising

0.03 wt% or less of Mo (excluding 0%), 0.0050 wt% or less of B (excluding 0%), 0.0050 wt% or less of V (excluding 0%), 0.0050 wt% or less of Ca (excluding 0%), 0.0050 wt% or less of Nb (excluding 0%), and 0.0050 wt% or less of Mg (excluding 0%).

7. The non-oriented electrical steel sheet of claim 1, wherein
the non-oriented electrical steel sheet satisfies Equation 1:

[Equation 1]

$$(B50_L + B50_C) / 2 \geq 1.63$$

(here, $B50_L$ is flux density (B50, Tesla) measured in a rolling direction, and $B50_C$ is flux density (B50, Tesla) measured in a vertical direction to the rolling direction).

8. The non-oriented electrical steel sheet of claim 1, wherein

the non-oriented electrical steel sheet satisfies Equation 2

[Equation 2]

$$\{(B50_L + B50_C + B50_{60}) / 3\} / \{ (B50_L + B50_C) / 2\} \geq 0.95$$

(here, $B50_L$ is flux density (B50, Tesla) measured in the rolling direction, $B50_C$ is flux density (B50, Tesla) measured in the vertical direction to the rolling direction, and $B50_{60}$ is flux density (B50, Tesla) measured in the direction forming an angle of 60 degrees with respect to the rolling direction).

9. The non-oriented electrical steel sheet of claim 1, wherein

the non-oriented electrical steel sheet satisfies Equation 3:

[Equation 3]

$$B50_{60} / \{ (B50_L + B50_C) / 2\} \geq 0.90$$

(here, $B50_L$ is flux density (B50, Tesla) measured in the rolling direction, $B50_C$ is flux density (B50, Tesla) measured in the vertical rolling direction, and $B50_{60}$ is flux density (B50, Tesla) measured in the direction forming the angle of 60 degrees with respect to the rolling direction).

10. The non-oriented electrical steel sheet of claim 1, wherein

the non-oriented electrical steel sheet satisfies Equation 4:

[Equation 4]

$$(W10/400_L + W10/400_C) / 2 \leq 6.885 \times e^{(2.99 \times t)}$$

(here, $W10/400_L$ is iron loss (W10/400, W/kg) measured in the rolling direction, $W10/400_C$ is iron loss (W10/400, W/kg) measured in the vertical rolling direction, e is a Euler's number, and t is thickness (mm) of the electrical steel sheet).

11. A method for manufacturing a non-oriented electrical steel sheet comprising:

manufacturing a hot rolled plate by hot rolling a slab including 2.5 to 4.0% of Si, 0.03 to 2.0% of Al, and 0.03 to 2.0% of Mn as wt%, a balance of Fe, and inevitable impurities;

manufacturing a preliminary cold-rolled steel sheet by preliminarily cold rolling the hot rolled plate by 20 to 80%;

annealing the preliminary cold-rolled steel sheet by heating the same at a temperature increase rate of 20°C/s or greater to thus perform intermediate annealing;

manufacturing a cold-rolled steel sheet by cold rolling the intermediately annealed preliminary cold-rolled steel sheet at a reduction ratio of 30 to 80%; and

annealing the cold-rolled steel sheet.

12. The method of claim 11, wherein
the manufacturing of a hot rolled plate includes performing finish rolling at the temperature of 850°C or higher.

13. The method of claim 11, wherein
the manufacturing of a hot rolled plate includes performing water cooling when at least 0.1 second passes after finish rolling.

14. The method of claim 11, wherein
the manufacturing of a hot rolled plate includes winding at the temperature of 600 to 800°C.

15. The method of claim 11, wherein
the slab further includes at least one of 0.005 to 0.2 wt% of Cu, 0.01 to 0.5 wt% of Cr, 0.05 wt% or less of Ni (excluding 0%), and 0.01 wt% or less of Zn (excluding 0%).

16. The method of claim 11, wherein
the slab further includes at least one of 0.1 wt% or less of P (excluding 0%), 0.003 wt% or less of C (excluding 0%), 0.004 wt% or less of S (excluding 0%), 0.003 wt% or less of Ti (excluding 0%), and 0.003 wt% or less of N (excluding 0%).

17. The method of claim 11, wherein
the slab further includes 0.005 to 0.200 wt% of one or more of Sn, Sb, Bi, Pb, Ge, and As individually or as a summed content thereof.

18. The method of claim 11, wherein
the slab further includes at least one of 0.03 wt% or less of Mo (excluding 0%), 0.0050 wt% or less of B (excluding 0%), 0.0050 wt% or less of (excluding 0%) of V, 0.0050 wt% or less of Ca (excluding 0%), 0.0050 wt% or less of Nb (excluding 0%), and 0.0050 wt% or less of Mg (excluding 0%).

## INTERNATIONAL SEARCH REPORT

| International application No. |
| --- |
| **PCT/KR2023/015567** |

### A. CLASSIFICATION OF SUBJECT MATTER

**C22C 38/02**(2006.01)i; **C22C 38/06**(2006.01)i; **C22C 38/04**(2006.01)i; **C22C 38/14**(2006.01)i; **C22C 38/08**(2006.01)i; **C22C 38/00**(2006.01)i; **C22C 38/12**(2006.01)i; **C21D 9/46**(2006.01)i; **C21D 8/12**(2006.01)i

According to International Patent Classification (IPC) or to both national classification and IPC

### B. FIELDS SEARCHED

Minimum documentation searched (classification system followed by classification symbols)

C22C 38/02(2006.01); B21B 1/24(2006.01); C21D 8/12(2006.01); C22C 38/00(2006.01); C22C 38/04(2006.01); H01F 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electric steel sheet), 결정방위(crystal orientation), 결정립(crystal grain)

### C. DOCUMENTS CONSIDERED TO BE RELEVANT

| Category* | Citation of document, with indication, where appropriate, of the relevant passages | Relevant to claim No. |
| --- | --- | --- |
| Y | JP 07-116508 B2 (NKK CORP.) 13 December 1995 (1995-12-13)<br>See pages 1-2, claim 1 and table 1. | 1-18 |
| Y | KR 10-1596448 B1 (POSCO) 23 February 2016 (2016-02-23)<br>See paragraphs [0007]-[0008], [0016] and [0066]-[0067], claims 7, 10, 14 and 16 and table 2. | 1-18 |
| Y | JP 2010-242186 A (NIPPON STEEL CORP.) 28 October 2010 (2010-10-28)<br>See paragraph [0016] and claim 1. | 13 |
| A | KR 10-0702875 B1 (JFE STEEL CORPORATION) 04 April 2007 (2007-04-04)<br>See paragraphs [0076]-[0080] and claims 6-8. | 1-18 |
| A | KR 10-2015-0074296 A (POSCO) 02 July 2015 (2015-07-02)<br>See claims 1-7, 11 and 19. | 1-18 |

✓ Further documents are listed in the continuation of Box C.　　✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 January 2024** | **16 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/015567** |

**C.    DOCUMENTS CONSIDERED TO BE RELEVANT**

| Category* | Citation of document, with indication, where appropriate, of the relevant passages | Relevant to claim No. |
|---|---|---|
| A | CN 112430779 A (BAOSHAN IRON & STEEL CO., LTD.) 02 March 2021 (2021-03-02)<br>See claims 1 and 7-11. | 1-18 |

Form PCT/ISA/210 (second sheet) (July 2022)

**INTERNATIONAL SEARCH REPORT**
Information on patent family members

International application No.

**PCT/KR2023/015567**

| Patent document cited in search report | | | Publication date (day/month/year) | Patent family member(s) | | | Publication date (day/month/year) |
|---|---|---|---|---|---|---|---|
| JP | 07-116508 | B2 | 13 December 1995 | JP | 02-232319 | A | 14 September 1990 |
| KR | 10-1596448 | B1 | 23 February 2016 | KR | 10-2015-0075255 | A | 03 July 2015 |
| JP | 2010-242186 | A | 28 October 2010 | None | | | |
| KR | 10-0702875 | B1 | 04 April 2007 | CN | 1138014 | C | 11 February 2004 |
| | | | | CN | 1305019 | A | 25 July 2001 |
| | | | | EP | 1081238 | A2 | 07 March 2001 |
| | | | | EP | 1081238 | A3 | 02 July 2003 |
| | | | | EP | 1081238 | B1 | 06 April 2011 |
| | | | | EP | 2287347 | A1 | 23 February 2011 |
| | | | | EP | 2287347 | B1 | 10 October 2012 |
| | | | | JP | 2001-073097 | A | 21 March 2001 |
| | | | | JP | 2001-247943 | A | 14 September 2001 |
| | | | | JP | 3855554 | B2 | 13 December 2006 |
| | | | | JP | 4240736 | B2 | 18 March 2009 |
| | | | | KR | 10-2001-0030210 | A | 16 April 2001 |
| | | | | TW | 481809 | A | 01 April 2002 |
| | | | | US | 2003-0024606 | A1 | 06 February 2003 |
| | | | | US | 6436199 | B1 | 20 August 2002 |
| | | | | US | 6531001 | B2 | 11 March 2003 |
| KR | 10-2015-0074296 | A | 02 July 2015 | CN | 104674136 | A | 03 June 2015 |
| | | | | CN | 104674136 | B | 14 November 2017 |
| | | | | KR | 10-1665950 | B1 | 13 October 2016 |
| | | | | KR | 10-2015-0062250 | A | 08 June 2015 |
| CN | 112430779 | A | 02 March 2021 | None | | | |

Form PCT/ISA/210 (patent family annex) (July 2022)